# EUROPÄISCHE PATENTSCHRIFT

(11) **EP 1 628 850 B1**
(45) Veröffentlichungstag und Bekanntmachung des Hinweises auf die Patenterteilung: **26.01.2011**
(21) Anmeldenummer: 04739157.8
(22) Anmeldetag: 08.05.2004
(51) Int. Cl.: B60K 17/16

(54) **ACHSE EINES FAHRZEUGS, INSBESONDERE EINES NUTZFAHRZEUGS**
AXLE OF A VEHICLE, ESPECIALLY OF A UTILITY VEHICLE
ESSIEU D'UN VEHICULE, NOTAMMENT D'UN VEHICULE UTILITAIRE

(30) Priorität: 04.06.2003 DE 10325221
(43) Veröffentlichungstag der Anmeldung: 01.03.2006
(73) Patentinhaber: ZF FRIEDRICHSHAFEN Aktiengesellschaft, 88038 Friedrichshafen (DE)
(72) Erfinder: REBHOLZ, Wolfgang, 88045 Friedrichshafen (DE)
(86) Internationale Anmeldenummer: PCT/EP2004/004940
(87) Internationale Veröffentlichungsnummer: WO 2004/108461

(56) Entgegenhaltungen:
- WO-A-01/65225
- AT-U- 6 550
- DE-A- 3 632 770
- DE-A- 3 635 406
- DE-C- 4 345 491
- FR-A- 2 811 270
- GB-A- 191 211 249

## Beschreibung

Die vorliegende Erfindung betrifft eine Achse eines Fahrzeugs, insbesondere eines Nutzfahrzeugs gemäß dem Oberbegriff des Patentanspruchs 1. Ferner betrifft die Erfindung ein Verfahren zum Lösen oder Herstellen einer Verbindung zwischen den Rädern einer erfindungsgemäßen Achse.

Üblicherweise weisen Achsen von Fahrzeugen ein Differential auf, um die Drehzahldifferenzen zwischen den beiden Rädern der Achse auszugleichen. Differentiale ermöglichen unterschiedliche Achs- und Raddrehzahlen bei Kurvenfahrt und gewährleisten eine gleichmäßige Verteilung der Antriebsmomente. Dadurch wird ein Radieren der Reifen, ein hoher Verschleiß sowie eine hohe Belastung des Antriebsstranges vermieden. Bei manchen Anwendungen ist es vorgesehen, dass das Differential gesperrt werden kann. So kann bei sportlichen Autos z.B. die Fahrstabilität erhöht werden. Bei geländegängigen Fahrzeugen kann auf diese Weise die Traktion sichergestellt bzw. erhöht werden. Ein Sperrdifferential ist im Rahmen der DE 3839787 C2 der Anmelderin beschrieben.

Die FR-A-211 270 offenbart eine Achse nach dem Oberbegriff des Hauptanspruchs.

Bei vielen Anwendungen ist es notwendig, die Sperren mit sehr kostenaufwändigen lastschaltbaren Kupplungen zu versehen. Dies ist insbesondere dann der Fall, wenn die
Sperren automatisch betätigt werden sollen, beispielsweise mittels einer elektronischen Steuerung. Dies resultiert in einem aufwendigen Aufbau der Achse, da neben dem Differential auch lastschaltbare Kupplungen benötigt werden, die ebenso wie das Differential selbst in der Lage sein müssen, das anliegende Drehmoment zu übertragen.

Der vorliegenden Erfindung liegt die Aufgabe zugrunde, eine Achse anzugeben, welche einfach aufgebaut ist und die Funktionalität eines Sperrdifferentials aufweist. Zudem soll die erfindungsgemäße Achse kostengünstig herstellbar sein. Des weiteren soll ein Verfahren zum Lösen oder Herstellen einer Verbindung zwischen den Rädern einer erfindungsgemäßen Achse angegeben werden.

Diese Aufgabe wird für eine Achse durch die Merkmale des Patentanspruchs 1 gelöst. Ein Verfahren zum Lösen oder Herstellen einer Verbindung zwischen den Rädern einer erfindungsgemäßen Achse ist Gegenstand des Patentanspruchs 3. Weitere Ausgestaltungen und Vorteile gehen aus den Unteransprüchen hervor.

Demnach wird vorgeschlagen, dass zwischen den Rädern der Achse ein lastschaltbares Schaltelement vorgesehen ist, welches zum Lösen der drehfesten Verbindung zwischen den Rädern betätigbar ist, so dass die Wirkungsweise eines Differentials mit einer lastschaltbar geregelten Differentialsperre erzielt wird. Dadurch entfällt in vorteilhafter Weise die Notwendigkeit eines Differentials.

Für die Achse gilt immer, dass die Summe der Momente beider Räder dem Eingangsmoment der Achse entspricht, wobei die festeingestellte Übersetzung des Kegeltriebes als konstanter Faktor mitberücksichtigt wird. Wenn beide Räder der Achse über eine Antriebswelle fest miteinander verbunden sind, wird sich das Moment in dieser Welle so einstellen, dass es aus dem Antriebsmoment, das aus dem Tellerrad eingeleitet wird, und einer zusätzlichen Komponente, die sich aus der inneren Verspannung der beiden Räder ergibt, besteht.

Gemäß der Erfindung werden das Eingangsmoment und das Moment der Verbindungswelle der beiden Räder mittels geeigneter Einrichtungen, z.B. Drehmomentmesseinrichtungen zu jedem Zeitpunkt gemessen, wobei aus dem jeweils anliegenden Antriebsmoment ein Sollmoment für die Verbindungswelle errechnet werden kann. Wenn das gemessene Moment der Verbindungswelle den errechneten Sollwert übersteigt, wird über eine geeignete Einrichtung, vorzugsweise ein lastschaltbares Schaltelement bzw. eine Kupplung die feste Verbindung beider Räder gelöst. Dadurch baut sich die innere Verspannung ab und das Drehmoment nähert sich wieder seinem Sollwert. Ist dieser erreicht, werden die Räder wieder über das lastschaltbare Schaltelement fest miteinander verbunden.

Somit ist es möglich, das Moment zwischen den Rädern zu jedem Zeitpunkt sehr nahe auf den Sollwert einzuregeln, so dass die erfindungsgemäße Achse vergleichbar funktioniert, wie eine Achse mit Differential und lastschaltbar geregelter Differentialsperre. Die vorliegende Erfindung kann insbesondere bei Nutzfahrzeugen, insbesondere Baumaschinen in vorteilhafter Weise eingesetzt werden, da bei derartigen Fahrzeugen die Sperre geschlossen bzw. die Räder drehfest miteinander verbunden sind.

## Patentansprüche

1. Achse eines Fahrzeugs, mit angetriebenen Rädern und einer Verbindungswelle, welche die Räder drehfest verbindet, und einem lastschaltbaren Schaltelement, welches zum Lösen der drehfesten Verbindung zwischen den Rädern betätigbar ist, wobei Drehmomentmesseinrichtungen angeordnet sind, über welche das Eingangsdrehmoment und das Drehmoment der Verbindungswelle kontiniuierlich ermittelt wird, **dadurch gekennzeichnet, dass** aus dem jeweils anliegenden Eingangsdrehmoment ein Solldrehmoment für die Verbindungswelle errechnet wird, und bei Übersteigen des Drehmoments der Verbindungswelle über das Solldrehmoment das lastschaltbare Schaltelement im Öffnungssinne betätigt wird, um die drehfeste Verbindung der Räder zu lösen.

2. Achse eines Fahrzeugs nach Anspruch 1, **dadurch gekennzeichnet, dass** das zuvor im Öffnungssinne betätigte Schaltelement im Schließsinne betätigt wird, wenn das Drehmoment der Verbindungswelle dem Solldrehmoment entspricht, um die Räder drehfest zu verbinden.

3. Achse eines Fahrzeugs nach Anspruch 1, **dadurch gekennzeichnet, dass** das Drehmoment der Verbindungswelle zwischen den Rädern nahezu auf das Solldrehmoment eingeregelt wird.

4. Verfahren zum Lösen oder Herstellen einer drehfesten Verbindung zwischen den Rädern einer Achse nach Anspruch 1, **dadurch gekennzeichnet, dass** das Eingangsdrehmoment und das Drehmoment der Verbindungswelle kontiniuierlich gemessen wird, aus dem Eingangsdrehmoment ein Solldrehmoment errechnet wird, das Solldrehmoment mit dem Drehmoment der Verbindungswelle verglichen wird und bei Überschreiten des Drehmomentes der Verbindungswelle über das Solldrehmoment das Schaltelement im Öffnungssinne betätigt wird und, wenn das Drehmoment der Verbindungswelle das Solldrehmoment erreicht, das Schaltelement im Schließsinne betätigt wird.

## Claims

1. Axle of a vehicle, having driven wheels and having a connecting shaft which co-rotationally connects the wheels, and having a shift element which can be shifted under load and which can be actuated in order to release the co-rotational connection between the wheels, with torque measuring devices being provided by means of which the input torque and the torque of the connecting shaft are continuously determined, **characterized in that** a setpoint torque for the connecting shaft is calculated from the respectively acting input torque, and in the event of the torque of the connecting shaft exceeding the setpoint torque, the shift element which can be shifted under load is actuated in the opening sense in order to release the co-rotational connection of the wheels.

2. Axle of a vehicle according to Claim 1, **characterized in that** the shift element previously actuated in the opening sense is actuated in the closing sense, in order to co-rotationally connect the wheels, when the torque of the connecting shaft corresponds to the setpoint torque.

3. Axle of a vehicle according to Claim 1, **characterized in that** the torque of the connecting shaft between the wheels is adjusted approximately to the setpoint torque.

4. Method for releasing or producing a co-rotational connection between the wheels of an axle according to Claim 1, **characterized in that** the input torque and the torque of the connecting shaft are measured continuously, a setpoint torque is calculated from the input torque, the setpoint torque is compared with the torque of the connecting shaft, and the shift element is actuated in the opening sense in the event of the torque of the connecting shaft exceeding the setpoint torque, and the shift element is actuated in the closing sense when the torque of the connecting shaft reaches the setpoint torque.

## Revendications

1. Essieu d'un véhicule, comprenant des roues entraînées et un arbre de liaison qui relie les roues de manière solidaire en rotation, et un élément de commutation pouvant être sollicité en charge, qui peut être commandé pour desserrer la liaison solidaire en rotation entre les roues, des dispositifs de mesure de couple étant prévus, par le biais desquels le couple d'entrée et le couple de l'arbre de liaison sont déterminés en continu, **caractérisé en ce que** l'on calcule un couple de consigne pour l'arbre de liaison à partir du couple d'entrée s'appliquant respectivement, et en cas de dépassement du couple de l'arbre de liaison au-delà du couple de consigne, l'élément de commutation pouvant être sollicité en charge est commandé dans le sens de l'ouverture, afin de desserrer la liaison solidaire en rotation des roues.

2. Essieu d'un véhicule selon la revendication 1, **caractérisé en ce que** l'élément de commutation commandé préalablement dans le sens de l'ouverture est commandé dans le sens de la fermeture lorsque le couple de l'arbre de liaison correspond au couple de consigne afin de relier les roues de manière solidaire en rotation.

3. Essieu d'un véhicule selon la revendication 1, **caractérisé en ce que** le couple de l'arbre de liaison entre les roues est pratiquement réglé au couple de consigne.

4. Procédé pour desserrer ou établir une liaison solidaire en rotation entre les roues d'un essieu selon la revendication 1, **caractérisé en ce que** le couple d'entrée et le couple de l'arbre de liaison sont mesurés en continu, un couple de consigne est calculé à partir du couple d'entrée, le couple de consigne est comparé au couple de l'arbre de liaison et en cas de dépassement du couple de l'arbre de liaison au-delà du couple de consigne, l'élément de commutation est commandé dans le sens de l'ouverture, et si le couple de l'arbre de liaison atteint le couple de consigne, l'élément de commutation est commandé dans le sens de la fermeture.
